# EUROPEAN PATENT APPLICATION

(11) **EP 4 825 339 A1**
(43) Date of publication of application: **21.10.2026**
(21) Application number: 24902475.3
(22) Date of filing: 13.11.2024
(51) Int. Cl.: A61C 17/22

(54) **ELECTRIC TOOTHBRUSH AND POWER SUPPLY ASSEMBLY**

(30) Priority: 11.12.2023 CN 202311695208
(71) Applicant: Dai, Xiaoguo, Shanghai 201506 (CN); Shanghai Shift Electrics Co., Ltd., Shanghai 201506 (CN)
(72) Inventor: DAI, Xiaoguo, Shanghai 201506 (CN)
(74) Representative: WSL Patentanwälte Partnerschaft mbB
(86) International application number: PCT/CN2024/131710
(87) International publication number: WO 2025/124052

(57) **Abstract**

The present disclosure discloses an electric toothbrush and a power supply assembly. The electric toothbrush comprises a handle housing, a rear cover and a rack, the rack being stationary in the handle accommodating cavity relative to the handle housing, the rack having a battery receiving portion; wherein the electric toothbrush further comprises a rotating assembly arranged adjacent to the rear cover, the rotating assembly comprising a bracket; and a first conductive member held by the bracket; wherein the bracket brings the first conductive member to rotate between a first position in which the first conductive member rotates to an end of the battery receiving portion to form an electrical connection and a second position in which the first conductive member rotates away from the battery receiving portion with the bracket and forms a passage allowing the battery to be installed into or removed from the battery receiving portion. With the electric toothbrush according to the present disclosure, after the rechargeable battery is damaged or degraded, ordinary consumers can easily replace the rechargeable battery without special tools to continue using the electric toothbrush.

## Description

### TECHNICAL FIELD

The disclosure relates to an electric toothbrush, and more specifically to an electric toothbrush with a replaceable battery. Furthermore, the present disclosure further relates to a power supply assembly suitable for an electric toothbrush.

### BACKGROUND

Electric toothbrushes are widely used, and most electric toothbrushes currently available have rechargeable batteries. However, replacing the rechargeable batteries in most electric toothbrushes is inconvenient. In existing electric toothbrushes, conductive members of the rechargeable battery are electrically connected to a PCB board via soldering. To replace the battery, the entire internal assembly is required to be removed from the handle housing using a tool, then an electrical connection between the battery and the PCBA is disconnected using a soldering iron to remove the battery. A new battery is then soldered onto the PCBA using the soldering iron, and the entire internal assembly is reassembled back into the handle housing. The above process is relatively complicated, and since the internal assembly also comprises a transducer and a switch, removing and reinstalling the internal assembly is a complicated process that an ordinary consumer cannot readily accomplish the replacement, which typically necessitates intervention by a professional to avoid a degradation in the performance of the electric toothbrush.In conclusion, the drawbacks of disassembling and replacing the battery may cause consumers to forgo battery replacement, which is unfavorable for environmental protection and low-carbon sustainability.

Therefore, it is desirable to improve the electric toothbrush so that, when the rechargeable battery has deteriorated or been damaged, an ordinary consumer can readily replace the rechargeable battery to continue using the electric toothbrush.

### SUMMARY

To overcome the shortcomings of existing technology, the present disclosure provides an electric toothbrush comprising: a handle housing having a handle accommodating cavity formed therein, the handle accommodating cavity having an opening at a rear end; a rear cover detachably attached to the opening of the handle accommodating cavity; and a rack being stationary in the handle accommodating cavity relative to the handle housing, the rack having a battery receiving portion; wherein the electric toothbrush further comprises a rotating assembly arranged adjacent to the rear cover, the rotating assembly being pivotally connected to an end of the rack adjacent to the rear cover via a pivot portion, the rotating assembly comprising a bracket; and a first conductive member held by the bracket; wherein the bracket brings the first conductive member to rotate between a first position in which the first conductive member rotates to an end of the battery receiving portion to form an electrical connection and a second position in which the first conductive member rotates away from the battery receiving portion with the bracket and forms a passage allowing the battery to be installed into or removed from the battery receiving portion.

According to one aspect of the disclosure, the electric toothbrush further comprises a rechargeable battery, the rotating assembly further comprises a charging coil wound around the bracket and pivoting with the bracket relative to the rack, and the charging coil is arranged immediately adjacent to the rear cover when the rear cover is attached to the handle housing.

According to another aspect of the disclosure, the electric toothbrush further comprises a PCB board, and the charging coil and the first conductive member are both fixedly connected to the PCB board in the first position and the second position.

According to another aspect of the disclosure, the first conductive member is fixedly connected to a PCB board or a motor via a flexible connecting wire, so as to electrically connect the battery to the PCB board or the motor.

According to another aspect of the disclosure, when the rotating assembly is mounted to the rack, a portion or an entirety of the rotating assembly protrudes from the opening of the handle housing in a direction of a longitudinal axis, and the rear cover forms a rear cover accommodating cavity, and after the rear cover is mounted on the handle housing, the portion or the entirety of the rotating assembly protruding from the opening is received in the rear cover accommodating cavity.

According to another aspect of the disclosure, the rotating assembly further comprises a conductive member top cover, a first conductive member being held between the bracket and the conductive member top cover, the first conductive member being formed by stamping a sheet of metal and forming protrusions towards the battery, and the conductive member top cover being provided with an opening, wherein when the rear cover is locked to the handle housing, the protrusions of the first conductive member protrude from the opening in the conductive member top cover and contacts the electrode portion of the battery to form a conductive path.

According to another aspect of the disclosure, a second conductive member is provided at the other end of the battery receiving portion of the rack away from the rear cover, the second conductive member being mounted to the rack.

According to another aspect of the disclosure, the second conductive member is a helical spring comprising a main body and an extension for electrical connection, the main body comprising a first end abutting against an electrode portion of a battery and a second end fixed to a rack, the extension extending from the first end of the main body of the helical spring abutting against the electrode portion.

According to another aspect of the disclosure, the pivot portion forms a rotation axis located radially outwardly from the battery receiving portion, and the rotation axis is substantially perpendicular to or substantially parallel to the longitudinal axis of the handle housing.

According to another aspect of the disclosure, the electric toothbrush comprises a rechargeable battery and a charging coil wound on the rack, wherein an inner diameter of the charging coil is larger than an outer diameter of the battery.

With the electric toothbrush according to the disclosure, after the rechargeable battery is damaged or degraded, ordinary consumers can easily replace the rechargeable battery without special tools to continue using the electric toothbrush.

Furthermore, the present disclosure also provides a power supply assembly comprising a rack forming a battery receiving portion; and a first conductive member and a second conductive member respectively disposed at both ends of the battery receiving portion, and at least one of the first conductive member and the second conductive member is a helical spring; wherein the helical spring comprises a main body and an extension for electrical connection, the main body comprising a first end portion adjacent to and directly abutting an electrode portion of the battery, and a second end portion opposite to the first end portion, and wherein the extension extends from the first end of the main body of the helical spring abutting against the electrode portion.

Since the first end of the helical spring directly contacts the electrode of the battery and extends out for electrical connection, the electrical resistance of the spring between the power-consuming component and the battery electrode is greatly reduced, effectively solving the problem of damage to the rack due to excessive instantaneous current, avoiding safety hazards, and improving circuit efficiency.

According to another aspect of the disclosure, the main body of the helical spring is conical, with a smaller diameter at the first end and a larger diameter at the second end of the helical spring being fixed to the rack. The end with a larger diameter is more reliably fixed to the rack, and assembly is easier.

According to another aspect of the disclosure, a power supply assembly is used for an electric toothbrush, the electric toothbrush comprising a PCB board mounted on a rack, wherein an extension extends to and is fixedly electrically connected to the PCB board, and power from the battery mounted in a battery receiving portion is communicated from a first end to the PCB board through the extension. Preferably, the extension of the helical spring extends in a straight line from the end to the PCB board to minimize the length of the extension and improve circuit efficiency.

### BRIEF DESCRIPTION OF THE DRAWINGS

To completely understand the present disclosure, the following description of exemplary embodiments may be considered in conjunction with the accompanying drawings, in which:
FIG. 1 shows a perspective view of an electric toothbrush according to a preferred embodiment of the present disclosure.
FIG. 2 shows a perspective view of a portion of an internal structure of the electric toothbrush according to the preferred embodiment of the present disclosure.
FIG. 3 shows another perspective view of a portion of the internal structure of the electric toothbrush according to the preferred embodiment of the present disclosure.
FIG. 4 shows a perspective view of a rotating assembly of the electric toothbrush according to the preferred embodiment of the present disclosure.
FIG. 5 shows a perspective view of a conductive member top cover of the rotating assembly of the electric toothbrush according to the preferred embodiment of the present disclosure.
FIG. 6 shows a partial perspective view of a rack assembly of the electric toothbrush according to the preferred embodiment of the present disclosure.
FIG. 7 shows a perspective view of a rear end of the electric toothbrush according to the preferred embodiment of the present disclosure.
FIG. 8 shows a partial cross-sectional perspective view of the electric toothbrush according to the preferred embodiment of the present disclosure, with the rotating assembly in an open position and the battery sliding out of the rack assembly.
FIG. 9 shows a perspective view of a power supply assembly of an electric toothbrush according to another embodiment of the present disclosure.
FIG. 10 shows a perspective view of a spring in FIG. 9.
FIG. 11 shows a perspective view of a conductive member in a power supply assembly of the electric toothbrush according to the preferred embodiment of the present disclosure.Figure 12 shows a perspective view of an end cover of the electric toothbrush according to the preferred embodiment of the present disclosure.
FIG. 13 shows a perspective view of a rotating assembly of an electric toothbrush according to a second embodiment of the present disclosure.
FIG. 14 shows a partial perspective view of a rack of an electric toothbrush according to the second embodiment of the present disclosure.FIG. 15 shows a partial perspective view of an electric toothbrush according to a third embodiment of the present disclosure.
FIG. 16 shows another partial perspective view of the electric toothbrush according to the third embodiment of the present disclosure, with the rotating assembly in an open position.

### List of reference signs

- 100: Electric toothbrush
- 3: Toothbrush head
- 1, 1": Handle housing
- 2: Rear cover
- 21: Rear cover protrusion
- 6, 6', 6": Rotating assembly
- 61, 61': Bracket
- 62 , 62' , 62": Charging coil
- 621: Lead
- 63: Conductive member
- 64: Conductive member top cover
- 65: Top cover rotation hole
- 66 , 66': Cantilever arm
- 4 , 4' , 4": Rack
- 45': Rack rotation hole
- 65": Protruding shaft
- 41: Rack protrusion
- 52, 52': Spring
- 54, 54': Extension
- 7: Rechargeable battery
- 8, 8': PCB board
- 9: Switching device
- 51: Flexible connecting wire
- L: Longitudinal axis
- L1 , L2: Rotation axis
- w1, w2: Rotation direction

### DETAILED DESCRIPTION

The disclosure will be further described below in conjunction with specific embodiments and the accompanying drawings. In the following description, more details are set forth to facilitate a thorough understanding of the disclosure. However, it is obvious that the disclosure can be implemented in various other ways different from those described herein. Those skilled in the art can make similar generalizations and deductions according to practical application situations without departing from the connotation of the disclosure. Therefore, the content of this specific embodiment should not be construed as limiting the protection scope of the disclosure.

In the following description, "front" usually refers to the side or direction of the electric toothbrush closer to the toothbrush head, while "rear" usually refers to the side or direction of the electric toothbrush away from the toothbrush head.

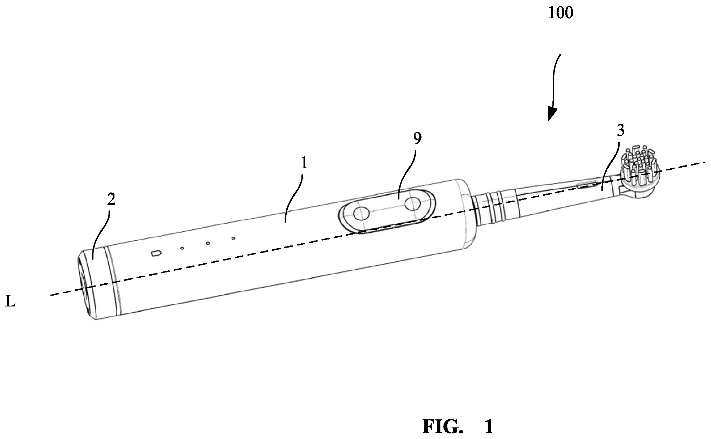

FIG. 1 shows the perspective view of the electric toothbrush 100 according to the preferred embodiment of the present disclosure. As shown in FIG. 1, the electric toothbrush 100 comprises a handle portion and a toothbrush head 3 replaceably connected to a drive shaft of the handle portion. The handle portion comprises, in its interior, a drive mechanism for driving the toothbrush head 3, a power for supplying electric power to the drive mechanism, and a control device, where the drive mechanism typically comprises a motor, a transducer, etc.

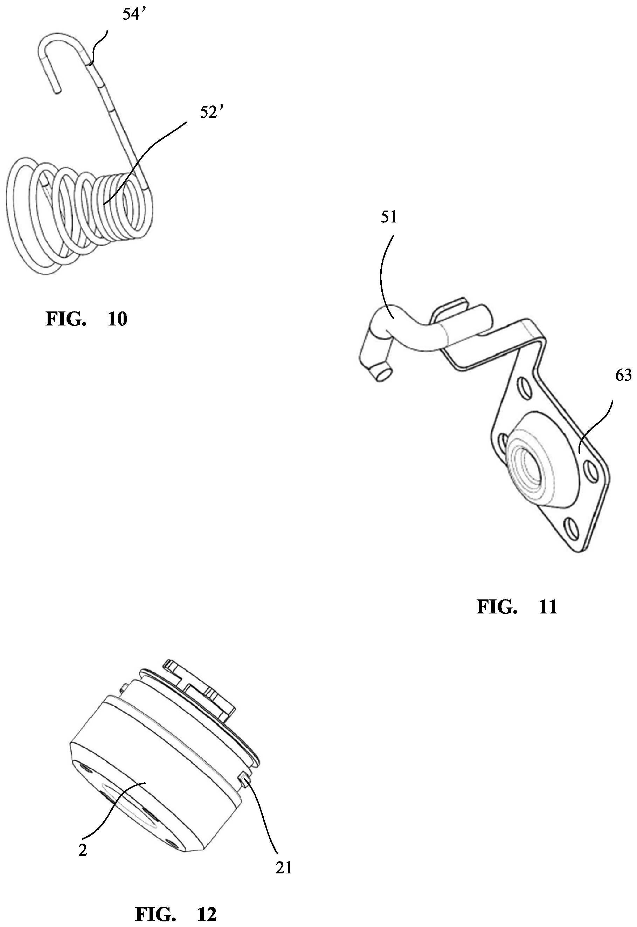

The handle portion has a elongated cylindrical outer profile. Externally, the handle portion comprises a handle housing 1 and a rear cover 2 detachably attached together. A handle accommodating cavity is formed inside the handle housing 1, and an opening is formed at a rear end of the handle accommodating cavity. The rear cover 2 is detachably attached to the opening at the rear end of the handle housing 1, for example, by a threaded connection or a snap-fit connection, forming a waterproof, sealed connection. In the preferred embodiment, as shown in FIG. 12, two protrusions 21 are provided on a cylindrical sidewall of the rear cover 2, preferably arranged radially opposite each other. Correspondingly, two grooves (not shown) are formed on the inner surface of the rear end of the handle housing 1.By rotating the rear cover 2 relative to the handle housing 1, the rear cover 2 can be locked at the opening of the handle housing 1 through the engagement of the protrusions 21 with the grooves, thus constraining the rear cover 2 in the direction of the longitudinal axis L of the handle housing 1 of the electric toothbrush 100. Futhermore, the handle housing 1 is also provided with a switch device 9 and several display members for switch operation and status indication.

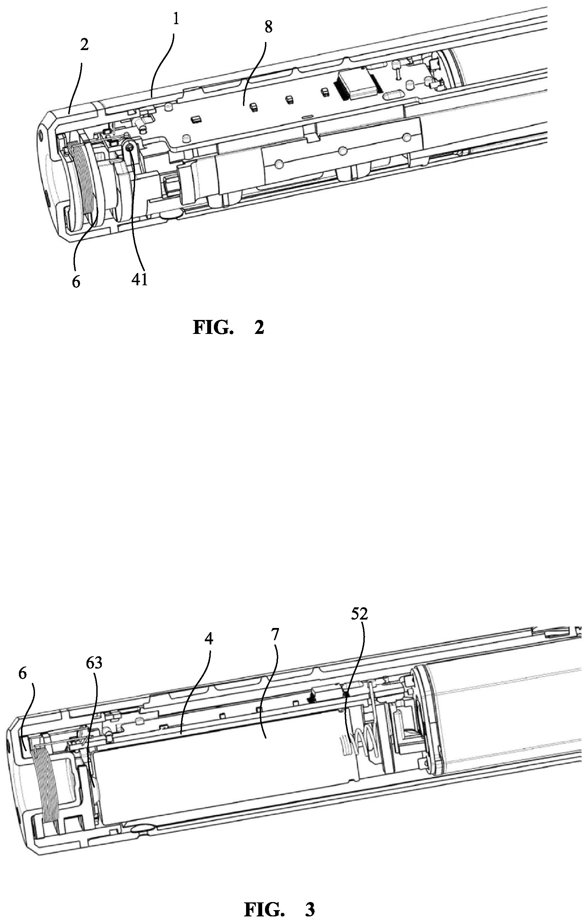

FIGS. 2 and 3 show perspective views of the internal structure of the electric toothbrush from different angles according to the first embodiment of the present disclosure, wherein a power supply assembly disposed adjacent to the rear cover 2 of the electric toothbrush is particularly shown. In the preferred embodiment, the power supply assembly comprises a rack having a battery receiving portion and conductive members connecting the two electrode portions of a battery, among others, wherein a rechargeable battery can be placed in the battery receiving portion.

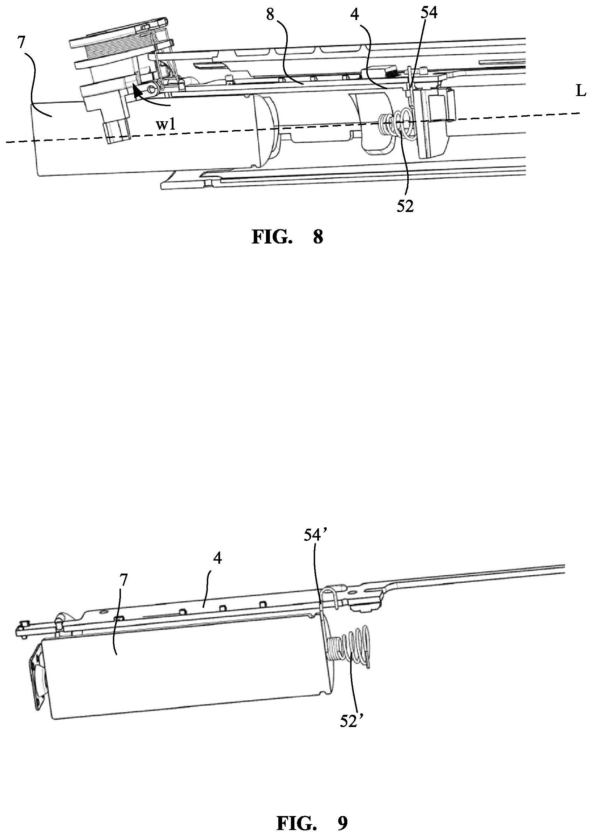

Specifically, the conductive members of the power supply assembly include a plate-shaped conductive member 63 (a first conductive member) located on the rear side and a spring (a second conductive member) 52 located on the front side as shown in FIG. 8, which are used to connect the two electrode portions of the rechargeable battery 7 to the PCB board, respectively. The spring 52 is fixedly mounted on the rack 4, and the end of the spring 52 adjacent to the rack 4 forms an extension 54 which extends toward and is soldered to the PCB board.

The rack 4 is stationarily arranged in the handle accommodating cavity relative to the handle housing 1. In addition to having a battery receiving portion to hold the battery in place, the rack 4 is also configured to hold other components, such as the PCB board, a motor and a transducer. In other alternative embodiments, the rechargeable battery 7 may be replaced with a non-rechargeable battery.

According to the first embodiment, the electric toothbrush 100 specifically comprises a rotating assembly 6 adjacent to the rear cover 2. This rotating assembly 6 contribute to the electrical connection of the power supply assembly and can therefore serve as a component of the power supply assembly. The rotating assembly 6 is configured to rotate between two different positions, wherein a first position is a connected position, in which the conductive member 61 in the rotating assembly 6 rotates to one end of the battery receiving portion to establish a direct electrical connection with one electrode portion of the battery 7 therein; the second position is an open position, in which the conductive member 63 of the rotating assembly 6 rotates away from the battery receiving portion with the bracket 61, disconnecting the connection with the electrode portion of the battery 7 and forming a passage allowing the battery 7 to be installed and removed relative to the battery receiving portion.

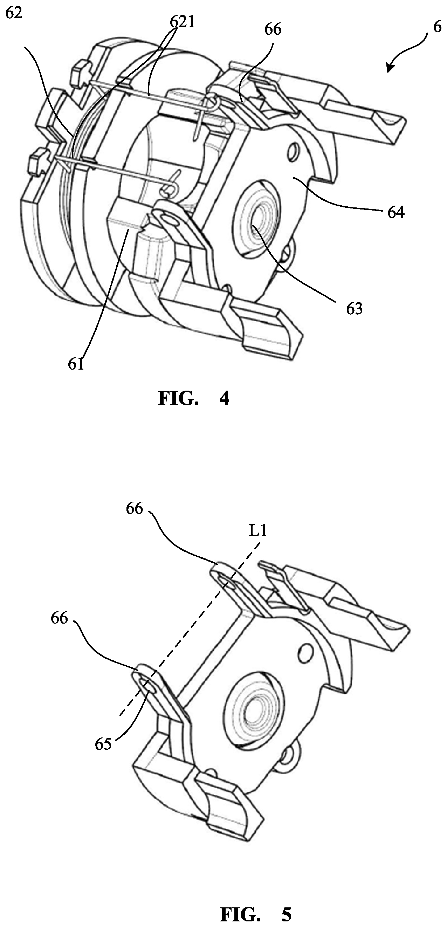

FIG. 4 shows the rotating assembly 6 according to the first embodiment of the present disclosure. The rotating assembly 6 is pivotally connected to an end of the rack 4 adjacent to the rear cover 2 via a pivot portion. The rotating assembly 6 comprises a bracket 61, a conductive member 63 held by the bracket 61, a charging coil 62 wound around the bracket 61, and a conductive member top cover 64.

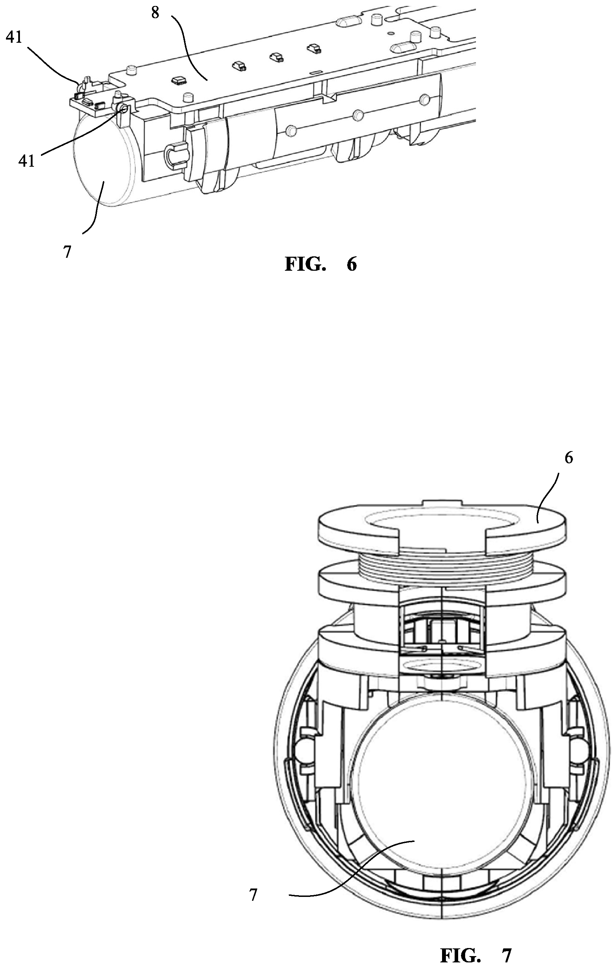

Preferably, as shown in FIG. 5, the conductive member top cover 64 of the rotating assembly 6 is provided with two cantilever arms 66 extending radially in the handle housing 1 perpendicular to the longitudinal axis L and being provided with top cover rotation holes 65, respectively. A line connecting center points of the two top cover rotation holes 65 forms a rotation axis L1 of the pivot portion, which is perpendicular to the longitudinal axis L. On the other hand, referring to FIG. 6, two cylindrical rack protrusions 41 are provided on the rack 4 corresponding to the position and size of the top cover rotation holes 65. When the rotating assembly 6 and the rack 4 are assembled together, the cover rotation holes 65 accommodate the rack protrusions 41. When the rack 4 is fixed in the handle housing 1 and the opening of the handle housing 1 is in an open state, the rotating assembly 6 can rotate about the rotation axis L1. It should be understood that, in order to form the passage sufficient to allow the battery 7 to leave the battery receiving portion after the rotating assembly 6 rotates, the pivot portion formed by the top cover rotation hole 65 and the rack protrusion 41, and the rotation axis L1 formed thereby, should be provided on the radially outwardly from the battery receiving portion of the rack 4, that is, on a side of the rack 4 that directly faces the inner surface of the handle housing 1.

As shown in FIG. 4, the conductive member 63 is clamped between the bracket 61 and the conductive member top cover 64. Also as shown in FIG. 11, the conductive member 63 is formed by stamping a sheet of conductive metal and forms a protrusion facing the rechargeable battery 7 at approximately the intermediate position. The conductive member top cover 64 is provided an opening in a middle portion corresponding to the position of the protrusion, and the protrusion of the conductive member 63 is retained to protrude from the opening in the conductive member top cover 64. When the rotating assembly 6 is rotated to the connection position and the rear cover 2 is locked onto the opening of the handle housing 1, the protrusion directly contacts the electrode portion of the rechargeable battery 7 to form a conductive path. The conductive member 63 further has a connecting portion extending from its edge, which extends perpendicularly to a plane in which the protrusion lies, and is fixedly connected to the PCB board of the rack via a flexible connecting wire 51 to enable the rechargeable battery 7 to supply power to various power-consuming components within the handle portion. The flexible connecting wire 51 is, for example, an electrical wire, and the connection between the flexible connecting wire 51 and the conductive member 63 may be achieved by soldering. When the battery needs to be replaced, the conductive member 63 rotates together with the bracket 61 between the connecting position in which the protrusion of the conductive member 63 contacts the electrode portion of the rechargeable battery and the open position in which the conductive member 63 rotates away from the electrode portion with the bracket, breaking the current path. However, regardless of whether it is in the connecting position or the open position, the conductive member 63 is fixed to the PCB board by means of a fixed connection means. Here, "fixed connection means" refers to a reliable electrical connection means that is not easy to disassemble, such as soldering.

As shown in FIG. 4, the charging coil 62 for charging the rechargeable battery 7 is wound around an end of the bracket 61 immediately adjacent to the rear cover 2 to generate an induced current. Two flanges are integrally formed on the bracket 61 and the charging coil 62 is retained therebetween. Two lead wires 621 extend from the charging coil 62 and are electrically connected to the PCB board 8. In the preferred embodiment, the ends of the coil lead wires 621 are soldered to the PCB board 8. The lead wires 621 of the charging coil 62 should be sufficiently long to allow the rotating assembly 6 to rotate, and specifically, during rotation of the rotating assembly 6, the soldered ends of the coil lead wires 621 may not be negatively affected by force, and the coil 62 and the PCB board 8 always maintain a fixed electrical connection. On the other hand, two spaced-apart recesses are preferably formed on the flange of the charging coil 62 that is adjacent to the PCB board 8, with the two lead wires 621 of the coil retained in the two recesses respectively, which facilitates the protection and positioning of the coil lead wires 621. When the battery 7 needs to be replaced, the coil 62 rotates together with the bracket 61 between the connecting position and the open position. Whether in the connected position or the open position, the coil lead wires 621 are electrically connected to the PCB board 8 by means of a fixed connection means.

To facilitate the rotation of the rotating assembly 6, the pivot portion is disposed adjacent to or provided at the opening of the handle housing 1, as shown in FIG. 8. Thus, when the rotating assembly 6 is mounted to the rack 4, a majority of the rotating assembly 6 protrudes from the opening of the handle housing 1. For this purpose, the sidewall of the rear cover 2 has a certain length along the longitudinal axis L to form a section of the rear cover accommodating cavity. Thus, after the rear cover 2 is mounted onto the handle housing 1, at least a portion of the rotating assembly 6 is received within the rear cover accommodating cavity. Preferably, at least a portion of the rotating assembly 6 comprising the coil is received within the rear cover accommodating cavity, as shown in FIG. 3. In an alternative embodiment, the entire rotating assembly 6 is received within the rear cover accommodating cavity. The length of the rear cover accommodating cavity of the rear cover 2 along a length of the longitudinal axis L is approximately equal to or slightly less than the length of the rotating assembly 6 along the length of the longitudinal axis L, such that when the rear cover 2 is opened, the rotating assembly 6 has sufficient rotational space to leave a passage for installing and removing the rechargeable battery 7 at an end of the battery receiving portion after rotation. As shown in FIG. 8, the pivot portion is adjacent to the opening but does not protrude from the opening. Such an arrangement is preferred, as the rotation angle of the rotating assembly 6 is limited by the edge of the opening, thus avoiding damage to the connecting wires of the coil 62 and the first conductive member 63 due to excessive rotation angle.

According to the first embodiment, the disassembly process of the rechargeable battery 7 is as follows.

First, the rear cover 2 is rotated such that the protrusion 21 thereon disengages from the groove of the handle housing 1, and the rear cover 2 is pulled out to expose the opening of the handle housing 1 at the rear end. Then, the rotating assembly 6 is rotated around the rotation axis L1 in the direction w1, as shown in FIG. 8, until the passage is left that allows the entire battery 7 to be removed such that the rechargeable battery 7 may be removed along the longitudinal axis L of the electric toothbrush 100. After inserting a rechargeable battery 7, the rotating assembly 6 is rotated in the opposite direction and finally the rear cover 2 is locked to complete the battery replacement. Since the charging coil 62 soldered to the PCB board 8 has a reasonably long lead wire 621, the charging coil 62 can always maintain electrical connection with the PCB board 8 during the rotation of the rotating assembly 6 and when it is rotated to its open position. At the same time, the conductive member 63 also always maintains electrical connection with the PCB board 8. Therefore, the original fixed electrical connection is not disrupted, making the replacement of the electric toothbrush's rechargeable battery 7 simple and reliable.

According to another aspect of the disclosure, in particular, FIGS. 9 and 10 show an improved spring 52' suitable for an electric toothbrush according to the disclosure. Compared with the spring 52 shown in Figure 8, the extensions 54 and 54' are provided at different positions on their respective springs.

With miniaturization of electric toothbrushes and an increasing demand for longer battery life, electric toothbrushes impose higher requirements on the volumetric energy density of batteries. Currently, electric toothbrushes commonly use 3.6V 750mAh lithium batteries. Due to unavoidable short circuit conditions that may occur during manufacturing or user operation, the energy of the battery is released instantaneously when a short circuit occurs. In such a short circuit event, the current can typically reach about 10A. In this case, for the spring 52 shown in Figure 8, the current needs to flow through the entire spring, and the resistance of the spring 52 itself is typically around 0.1 ohm. Consequently, the resistive power generated on the spring 52 would reach 10W, causing the spring 52 to become extremely hot. In severe cases, the high temperature of the spring 52 can burn through the rack 4, or even cause the rack 4 to catch fire, posing a safety hazard.

The spring 52' shown in FIGS. 9 and 10 effectively solves the above-mentioned problems. In the embodiment shown in FIGS. 9 and 10, the main body of the spring 52' is spirally coiled into a conical shape, with the end having a smaller diameter contacting an electrode of the rechargeable battery 7, and the end having a larger diameter attached to the rack 4. The end of the spring 52' having the smaller diameter extends towards the PCB board 8 to form an extension 54' for soldering to the PCB board 8 to achieve electrical connection. That is, at the end of the spring 52' that is closer to and in contact with the battery 7, there is a extension 54' extending in a straight line to the PCB board 8, and an end of the extension 54' is soldered to the PCB board 8. In this way, the current output by the rechargeable battery 7 does not flow through the spiral main body of the spring 52', but flows directly from the end of the spring 52' that abuts against the battery 7 to the PCB board 8 only along the extension 54'. In other words, only the resistance of a section of the extension 54' of the spring 52' consumes energy, and the resistance of the spring 52' participating in the current path is reduced by 5 to 10 times. Therefore, the problem of instantaneous high temperature of the spring when the circuit is short-circuited is solved, the safety of the electric toothbrush is improved, and there is no significant decrease in the electrical efficiency of the circuit.

It should be understood that in order to reduce the impact of the extension 54', the length of the extension 54' should be as short as possible. In this embodiment, the extension 54' extends tangentially from the last coil at the end of the spring 52' and extends in a straight line perpendicular to the axis of the spring body to the PCB board 8.

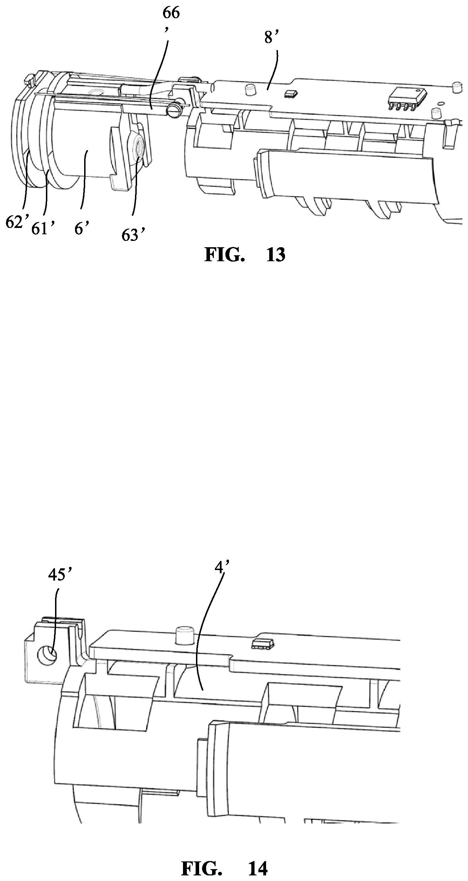

FIGS. 13 and 14 show a rotating assembly 6' according to a second embodiment of the present disclosure. Unlike the first embodiment, the rotating assembly 6' of the second embodiment omits the conductive member top cover; that is, the rotating assembly 6' comprises a bracket 61', a charging coil 62', and one conductive member 63'. The plate-shaped conductive member 63' is directly fitted onto the bracket 61' for example by form-fitting.

On the other hand, in the second embodiment, the pivot portion allowing the rotating assembly 6' to rotate comprises a rack rotation hole 45' provided on the rack 4' and cantilever arms 66', with a protruding shaft provided, extending toward the rack 4' formed in the bracket 61' of the rotating assembly 6', and the rotating assembly 6' and the rack 4' are rotatably connected together through the coupling of the protruding shaft and the rack rotation hole 45'. The pivot portion formed by the protruding shaft and the rack rotation hole 45' is close to the rear cover in the direction of the longitudinal axis L and is located radially outwardly from the battery receiving portion relative to the rear end of the battery receiving portion.

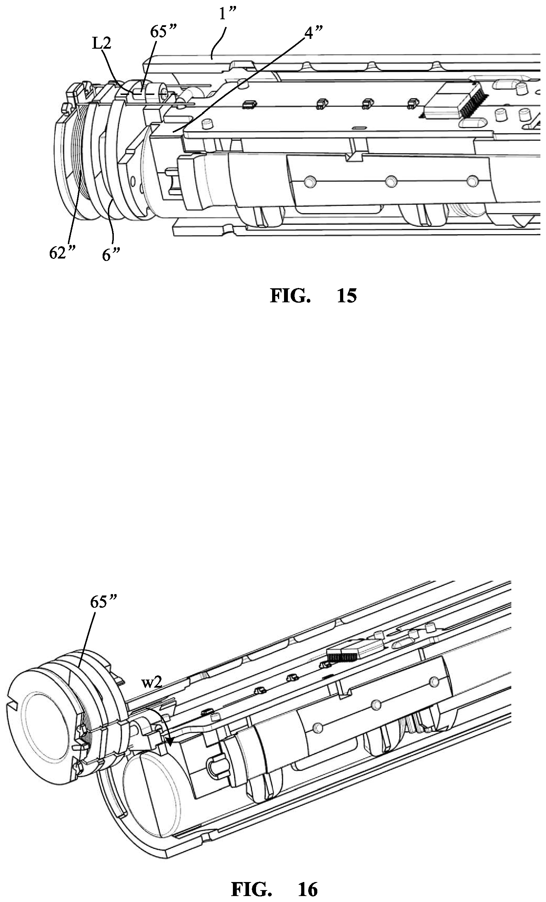

FIGS. 15 and 16 show a third embodiment according to the present disclosure. Unlike the first and second embodiments, in the third embodiment, a rotation axis L2 of the pivot portion is parallel to the longitudinal axis L.

Specifically, in the third embodiment, the bracket 61 of the rotating assembly 6" integrally forms a protruding shaft 65" which extends parallel to the longitudinal axis L. Correspondingly, a rear end of the rack 4" is provided with a hole that can pivotally receive the protruding shaft 65". Through the pivot portion formed by the pivotal engagement of the protruding shaft 65" and the hole, the rotating assembly 6" can rotate relative to the rack 4" between two positions.

In the third embodiment, except for the protruding shaft 65", other parts of the rotating assembly 6" are disposed outwardly from the opening of the handle housing 1" , and these parts are all accommodated in the rear cover accommodating cavity. Other structures of the rotating assembly 6" may be similar to those in the first or second embodiment, and will not be described in detail herein.

When disassembly is required, the rear cover is firstly rotated and removed in the same way to expose the opening of the handle housing 1" at the rear end. Then, the rotating assembly 6" is rotated around the rotation axis L2 in the w2 direction until it reaches the position shown in FIG. 16, leaving a passage for removing the battery 7. In this way, the rechargeable battery 7 can be removed along the longitudinal axis L of the electric toothbrush.

Other variations of the disclosure are also possible. In one alternative embodiment, the rotating assembly does not comprise a charging coil, which may be wound around the rack, typically adjacent to the rear cover, and the inner diameter of which (i. E., the diameter of the hollow portion) is larger than the outer diameter of the rechargeable battery. The rotating assembly comprises a bracket and a first conductive member for abutting against the electrode portion of the rechargeable battery. The rotating assembly is pivotally mounted at the rear end of the rack such that rotating the rotating assembly to an open position exposes a battery mounting and removal channel, allowing the rechargeable battery to be removed from the handle housing through the hollow portion of the charging coil.

The above embodiments are described in conjunction with rechargeable batteries. It should be understood that the above solutions can also be applied to non-rechargeable batteries. When using non-rechargeable batteries, the charging coil can be omitted.

In the above embodiments, the PCB board is provided on the rack by means of threaded connection, for example, and the conductive members at both ends of the battery are soldered to the PCB board. However, in other alternative embodiments, the conductive members can also be directly electrically connected to the motor provided in the handle portion.

Although the present disclosure has been disclosed above with reference to preferred embodiments, these embodiments are not intended to limit the present disclosure. Any person skilled in the art may make possible variations and modifications without departing from the spirit and scope of the present disclosure. Therefore, any modifications, equivalent changes, and improvements made to the above embodiments based on the technical essence of the present disclosure, without departing from the technical solution of the present disclosure, shall fall within the protection scope defined by the claims of the present disclosure.

## Claims

1. An electric toothbrush, comprising:
a handle housing having a handle accommodating cavity formed therein, the handle accommodating cavity having an opening at a rear end;
a rear cover detachably attached to the opening of the handle accommodating cavity; and
a rack being stationary in the handle accommodating cavity relative to the handle housing, the rack having a battery receiving portion;
wherein the electric toothbrush further comprises a rotating assembly arranged adjacent to the rear cover, the rotating assembly being pivotally connected to an end of the rack adjacent to the rear cover via a pivot portion, the rotating assembly comprising:
a bracket; and
a first conductive member held by the bracket;
wherein the bracket brings the first conductive member to rotate between a first position in which the first conductive member rotates to an end of the battery receiving portion to form an electrical connection and a second position in which the first conductive member rotates away from the battery receiving portion with the bracket and forms a passage allowing the battery to be installed into or removed from the battery receiving portion.

2. The electric toothbrush of claim 1, wherein the stopper comprises a rechargeable battery,
wherein the rotating assembly further comprises a charging coil wound around the bracket and pivoting with the bracket relative to the rack, and
wherein the charging coil is arranged immediately adjacent to the rear cover when the rear cover is attached to the handle housing.

3. The electric toothbrush of claim 2, wherein the electric toothbrush further comprises a PCB board, and the charging coil and the first conductive member are both fixedly connected to the PCB board in the first position and the second position.

4. The electric toothbrush of claim 1, wherein the first conductive member is fixedly connected to a PCB board or a motor via a flexible connecting wire.

5. The electric toothbrush of claim 1, wherein
a portion or an entirety of the rotating assembly protrudes from the opening of the handle housing in a direction of a longitudinal axis when the rotating assembly is mounted to the rack, and
wherein the rear cover forms a rear cover accommodating cavity, and when the rear cover is mounted onto the handle housing, the portion or the entirety of the rotating assembly protruding from the opening is received in the rear cover accommodating cavity.

6. The electric toothbrush of claim 1, wherein the rotating assembly further comprises a conductive member top cover, the first conductive member being clamped between the bracket and the conductive member top cover,
wherein the first conductive member is formed by stamping a sheet of metal and forms a protrusion facing the battery receiving portion, and the conductive member top cover is provided with an opening, and
wherein the protrusion of the first conductive member protrude from the opening in the conductive member top cover when the rear cover is locked to the handle housing to contact the electrode portion of the battery received in the battery receiving portion to form a conductive path.

7. The electric toothbrush of claim 1, wherein a second conductive member is provided at another end of the battery receiving portion of the rack away from the rear cover, the second conductive member being mounted to the rack.

8. The electric toothbrush of claim 7, wherein the second conductive member is a helical spring comprising a main body and an extension for electrical connection, the main body comprising a first end abutting against the electrode portion of the battery and a second end fixed to the rack,
wherein the extension extends from the first end of the main body of the helical spring abutting against the electrode portion.

9. The electric toothbrush of claim 1, wherein in that the pivot portion forms a rotation axis located radially outwardly from the battery receiving portion,
wherein the rotation axis is substantially perpendicular to or substantially parallel to a longitudinal axis of the handle housing.

10. The electric toothbrush of claim 1, wherein the electric toothbrush further comprises a rechargeable battery and a charging coil,
wherein the charging coil is wound on the rack, and the inner diameter of the charging coil is larger than the outer diameter of the battery.

11. A power supply assembly comprising:
a rack forming a battery receiving portion; and
a first conductive member and a second conductive member respectively disposed at both ends of the battery receiving portion, and at least one of the first conductive member and the second conductive member is a helical spring;
**characterized in that**
the helical spring comprises a main body and an extension for electrical connection, the main body comprising a first end portion adjacent to and directly abutting an electrode portion of the battery, and a second end portion opposite to the first end portion,
wherein the extension extends from the first end of the main body of the helical spring abutting against the electrode portion.

12. The power supply assembly of claim 11, wherein the main body of the helical spring is conical, the first end has a smaller diameter, and the second end has a larger diameter, wherein the second end of the helical spring is fixed to the rack.

13. The electric toothbrush of claim 11, wherein
the power supply assembly is used in the electric toothbrush comprising a PCB board mounted on the rack, and
wherein the extension extends to the PCB board and is fixedly electrically connected to the PCB board, and power from the battery installed in the battery receiving portion is conducted from the first end through the extension to the PCB board.

14. The power supply assembly of claim 11, wherein the extension extends in a straight line from the first end to the PCB board.
